# FASCICULE DE BREVET EUROPEEN

(11) **EP 4 653 648 B1**
(45) Date de publication et mention de la délivrance du brevet: **21.10.2026**
(21) Numéro de dépôt: 25176258.9
(22) Date de dépôt: 14.05.2025
(51) Int. Cl.: E04H 17/00, A01K 3/00, E04H 17/12

(54) **PIQUET POUR CLÔTURE ÉLECTRIQUE**
PFOSTEN FÜR ELEKTRISCHEN ZAUN
POST FOR AN ELECTRIC FENCE

(30) Priorité: 14.05.2024 FR 2404890
(43) Date de publication de la demande: 26.11.2025
(73) Titulaire: Profilés de l'Ouest, 22940 Plaintel (FR)
(72) Inventeur: LE MAREC, Florent, 22000 Saint-Brieuc (FR)
(74) Mandataire: Derriennic, Tangui Jean

(56) Documents cités:
- EP-A1- 4 033 055
- CH-A5- 695 011
- DE-A1- 3 501 746
- FR-A1- 2 273 143
- NZ-A- 519 409

## Description

### Domaine technique de l'invention

La présente invention concerne un piquet pour clôture électrique. Elle s'applique, en particulier, aux exploitants agricoles, éleveurs de bovins, d'ovins, volailles, équins...

Une clôture électrique vise principalement à délimiter les prairies agricoles dans le but de protéger les animaux tout en préservant les espaces verts qu'elle encadre. En outre, elle offre des applications diverses dans d'autres secteurs tels que le balisage dans la construction, les terrains de sports mécaniques, les golfs, ainsi que les courses de chevaux d'endurance, entre autres.

### Technique antérieure

Sur le marché, divers types de piquets de clôture agricole et systèmes de balisage sont disponibles, mais ils présentent chacun des défauts qui peuvent être plus ou moins importants.

Tout d'abord, le piquet de clôture en fibre de verre est une solution qui se caractérise par son coût élevé, sa fragilité et sa tendance à se casser facilement. Cela représente un risque non négligeable de coupure lors de son installation pour l'utilisateur final et les animaux d'élevage à long terme. Bien que partiellement recyclable, le processus de recyclage de la fibre de verre reste coûteux et énergivore.

Ensuite, le piquet en bois de type châtaignier est une option couramment utilisée. Malgré ses avantages, son coût reste élevé et des accessoires de fixation supplémentaires sont souvent nécessaires pour le passage des rubans. De plus, sa recyclabilité reste possible mais partiellement faisable, et le produit lui-même est sujet à la pourriture, avec une durée de vie moyenne d'environ 8 ans.

Le piquet en composite, qu'il soit de forme ronde ou en croix, est une solution qui se distingue par son coût élevé. Tout comme le piquet en bois, des accessoires de fixation supplémentaires sont souvent nécessaires. Cependant, sa recyclabilité est réalisable.

Enfin, le piquet de clôture en acier est sujet à la corrosion, ce qui réduit sa durée de vie et nécessite un remplacement régulier. De plus, il est coûteux à l'achat et très énergivore à fabriquer. Sa lourdeur rend son installation plus difficile, nécessitant davantage d'efforts physiques. En outre, étant conducteur d'électricité, il présente un risque pour les animaux et les personnes, ce qui nécessite l'ajout d'accessoires isolateurs pour le passage des rubans.

Certains piquets sont en PVC. Le PVC, ou polychlorure de vinyle, est un polymère thermoplastique largement utilisé dans de nombreux domaines industriels. Il est fabriqué à partir de monomères de chlorure de vinyle par polymérisation. Le PVC se présente sous forme de poudre blanche qui peut être transformée par divers procédés de fabrication, tels que l'extrusion, le moulage par injection ou le calandrage.

Le PVC est apprécié pour ses nombreuses qualités, notamment sa résistance à l'humidité, aux produits chimiques, à la corrosion et aux chocs. Il est également facile à travailler, à façonner et à assembler, ce qui en fait un matériau polyvalent utilisé dans la fabrication de nombreux produits.

Certains documents de l'art antérieur montrant des techniques existantes sur le piquet pour clôture électrique. On peut citer le document NZ519409 décrivant un poteau pour clôture.

Cependant ce document ne satisfait pas les objectifs de la présente invention.

### Présentation de l'invention

La présente invention vise à remédier à ces inconvénients avec une approche totalement novatrice.

Plus précisément, l'invention a pour objectif d'assurer la qualité du produit fini, garantissant ainsi sa durabilité et sa fiabilité. La solidité du piquet est également un critère essentiel à prendre en compte, car elle assure sa capacité à résister aux contraintes environnementales et aux utilisations variées. Par ailleurs, l'efficacité de l'objet est un élément clé, car il doit remplir sa fonction de manière optimale tout en minimisant les ressources nécessaires.

De plus, la facilité de mise en œuvre est un enjeu majeur, car elle influe sur la praticité et la rentabilité de l'utilisation du produit. Enfin, la question du recyclage est cruciale pour assurer une gestion responsable des ressources et réduire l'impact environnemental.

Ces objectifs, ainsi que d'autres qui apparaîtront par la suite, sont atteints, à l'aide d'un piquet pour clôture électrique, s'étendant entre une première extrémité et une deuxième extrémité, la première extrémité comporte une portion de pointe, destinée à être fichée en terre, entre la première et deuxième extrémité se trouve une portion principale, ledit piquet comportant au moins un moyen de support disposés le long de ladite portion principale, le ou lesdits moyens de support comportant une cavité apte à supporter un élément conducteur, ledit élément conducteur est un ruban conducteur, l'avant de ladite cavité étant partiellement fermé par deux rebords qui définissent entre eux une fente configurée pour la mise en place d'un élément conducteur dans ladite cavité, remarquable en ce qu'il comporte une section ayant au moins cinq branches, la longueur de la cavité apte à supporter un élément conducteur est comprise entre 2 et 5 cm ; ledit piquet comporte une gorge réalisée par un fraisage d'un rayon compris entre 4 et 8 mm, à une distance comprise entre 2 et 8 cm de préférence entre 2,5 et 4,5 cm de la deuxième extrémité.

Grâce à ces dispositions, le piquet améliore la performance et de la durabilité des clôtures électriques.

Premièrement, la conception du piquet avec une portion de pointe facilite son enfoncement dans le sol, assurant ainsi une fixation solide et fiable. Cela garantit que la clôture reste bien en place, même dans des conditions de sol difficiles, réduisant ainsi les risques de dommages ou de dysfonctionnements.

Deuxièmement, la présence de moyens de support disposés le long de la portion principale du piquet offre une solution pratique pour fixer les éléments conducteurs de la clôture, tels les rubans.

Un ruban conducteur est un élément allongé, souple ou semi-rigide, constitué d'un ou plusieurs matériaux électriquement conducteurs, agencé pour assurer la transmission d'un courant électrique entre un plateau électrique et un élément de connexion externe. Le ruban conducteur peut être formé d'une couche unique ou de plusieurs couches superposées, et il peut comprendre un support isolant partiellement recouvert d'un matériau conducteur, ou être entièrement conducteur sur sa surface. Le ruban est dimensionné et configuré pour être attaché mécaniquement et électriquement auxdits plateaux électriques, et peut inclure des caractéristiques d'attache telles que des œillets, des languettes ou des dispositifs de fixation intégrés.

La cavité dans ces moyens de support fournit un espace sécurisé pour maintenir ces éléments en place, réduisant ainsi les risques de défaillance ou de rupture du système de clôture.

Troisièmement, la configuration de la cavité avec deux rebords partiellement fermés et une fente pour l'insertion de l'élément conducteur offre un mécanisme efficace pour fixer fermement l'élément en place tout en facilitant son installation. Cela garantit une connexion sécurisée et fiable entre le piquet et l'élément conducteur, assurant ainsi une conductivité électrique optimale dans toute la clôture.

Enfin, la section du piquet comportant au moins cinq branches renforce la stabilité et la résistance du piquet, répartissant efficacement les charges exercées sur celui-ci. Cela permet au piquet de mieux résister aux forces externes telles que le vent, les chocs ou la pression exercée par les animaux, assurant ainsi l'intégrité et la fonctionnalité de la clôture électrique sur le long terme.

La présence de la gorge fournit un espace dédié pour le positionnement de l'élément conducteur, tel qu'un ruban, à une distance spécifique de la deuxième extrémité du piquet. Cela garantit que l'élément conducteur est maintenu de manière sécurisée et stable le long du piquet, réduisant ainsi les risques de mouvement indésirable ou de détachement.

La gorge protège l'élément conducteur contre les dommages causés par des frottements excessifs ou des contraintes mécaniques. En le maintenant à l'intérieur de la gorge, l'élément conducteur est moins susceptible d'être endommagé par des éléments extérieurs tels que les intempéries, les animaux ou les activités humaines, ce qui prolonge sa durée de vie utile.

L'invention est avantageusement mise en œuvre selon les modes de réalisation et les variantes exposées ci-après, lesquelles sont à considérer individuellement ou selon toute combinaison techniquement opérante.

Dans un mode de réalisation, chaque bord du piquet comporte un chanfrein.

Les chanfreins sur les bords du piquet réduisent les arêtes vives, minimisant ainsi le risque de blessures lors de la manipulation ou de l'installation du piquet. Cela améliore la sécurité pour l'utilisateur et réduit les risques de dommages aux équipements ou aux matériaux environnants.

Les chanfreins sur les bords du piquet facilitent son enfoncement dans le sol. En réduisant la résistance au frottement, les chanfreins permettent au piquet de pénétrer plus facilement dans le sol, ce qui simplifie le processus d'installation et réduit la nécessité d'utiliser des outils ou des équipements spéciaux.

Dans un mode de réalisation, la longueur de la portion de pointe est comprise entre 15 et 5 cm, de préférence entre 10 et 8 cm.

Dans un mode de réalisation, entre la première extrémité et la deuxième extrémité, au centre du piquet se trouve un trou traversant.

Dans un mode de réalisation, la longueur de la cavité apte à supporter un élément conducteur est comprise entre 3 et 4 cm.

Dans un mode de réalisation, ledit piquet est réalisé en plastique recyclé et par extrusion.

Ainsi, le recyclage du plastique permet de réduire la quantité de déchets plastiques finissant dans les décharges ou dans l'environnement, contribuant ainsi à la lutte contre la pollution. En utilisant du plastique recyclé, on réduit la dépendance aux ressources naturelles comme le pétrole, nécessaire à la fabrication de plastique vierge. Cela contribue à préserver les ressources non renouvelables de la planète. La fabrication de plastique à partir de matériaux recyclés nécessite généralement moins d'énergie que la production de plastique vierge. Cela entraîne une réduction des émissions de gaz à effet de serre et de la consommation d'énergie.

Dans un mode de réalisation, la fente est oblique, par rapport à un axe longitudinal et au plan transversal dudit piquet, selon un angle compris entre 35° et 75°.

### Brève description des figures

D'autres avantages, buts et caractéristiques de la présente invention ressortent de la description qui suit faite, dans un but explicatif et nullement limitatif, en regard des dessins annexés, dans lesquels :
La figure 1 représente un schéma d'une coupe transversale du piquet selon un exemple de réalisation ;
La figure 2 représente une vue en perspective de la partie haute du piquet selon un exemple de réalisation ;
La figure 3 représente une vue en perspective de la partie basse du piquet selon un exemple de réalisation ;
La figure 4 représente une vue en perspective du piquet selon un exemple de réalisation ;
La figure 5 représente une autre vue en perspective du piquet selon un exemple de réalisation ;
La figure 6 représente une autre vue en perspective du piquet selon un exemple de réalisation ;
La figure 7 représente une vue de face d'une mise en place de deux piquets selon un exemple de réalisation ;
La figure 8 représente une vue de face d'une mise en place de deux piquets selon un autre exemple de réalisation.

### Description des modes de réalisation

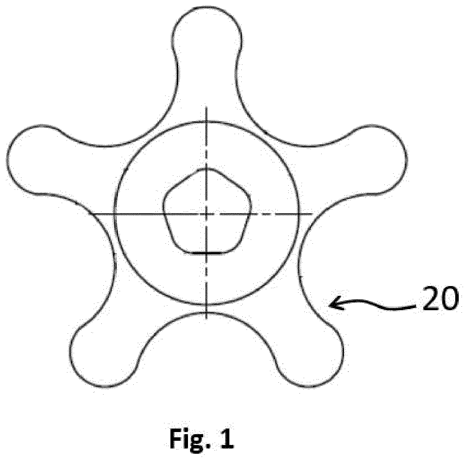

La figure 1 montre un schéma d'une coupe transversale du piquet 20.

Le mode de réalisation du piquet selon l'invention utilisé pour réaliser une clôture est généralement désigné par 20.

La forme ressemble à une étoile à cinq branches. La forme de l'étoile est arrondie et comporte des bords ronds.

Chaque branche comporte une partie plus fine que son extrémité.

Cette forme permet d'avoir une meilleure robustesse du piquet 20.

La forme à cinq branches est conçue pour maximiser sa solidité et sa résistance à l'effort de torsion au fil du temps. Contrairement aux piquets 20 classiques (parfois en forme de croix à quatre branches) qui peuvent se tordre et se plier facilement sous l'effet des éléments climatiques et naturels, cette forme spécifique offre une robustesse accrue. Chaque branche de l'étoile agit comme un renfort, répartissant efficacement les contraintes exercées sur le piquet 20. Cette répartition uniforme de la force contribue à minimiser les déformations indésirables et à maintenir l'intégrité structurelle du piquet 20 au fil du temps.

De plus, la conception à cinq branches offre une stabilité supplémentaire, réduisant ainsi les risques de basculement ou de désalignement même dans des conditions environnementales difficiles. Cette résistance accrue à la torsion et aux forces externes garantit une durabilité prolongée du piquet 20, ce qui en fait un choix fiable et économique pour les applications de clôture et de balisage nécessitant une performance à long terme.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

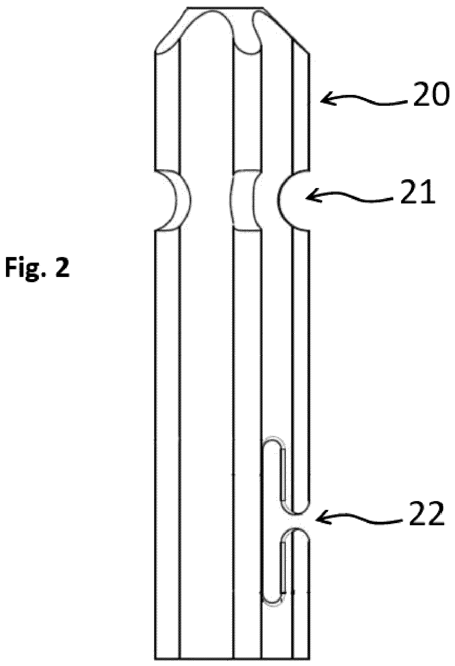

La figure 2 montre une vue en perspective de la partie haute du piquet 20.

La deuxième extrémité est visible sur cette figure. Il est visible une gorge 21 qui a été réalisée par une étape de fraisage. Cette gorge 21 sert à positionner un élément conducteur 24 en faisant le tour par exemple.

Il est visible aussi un moyen de support 22. Le moyen de support 22 comportant une cavité apte à supporter un élément conducteur 24 ou un ruban conducteur.

La longueur de la cavité apte à supporter un élément conducteur 24 est comprise entre 2 et 5 cm, de préférence entre 3 et 4 cm. Selon un exemple, la longueur est de 3,5 cm.

L'avant de la cavité est partiellement fermé par deux rebords qui définissent entre eux une fente configurée pour la mise en place d'un élément conducteur 24 dans la cavité.

Selon un exemple, la fente est oblique, par rapport à un axe longitudinal et au plan transversal dudit piquet 20, selon un angle compris entre 35° et 75°, de préférence 45°

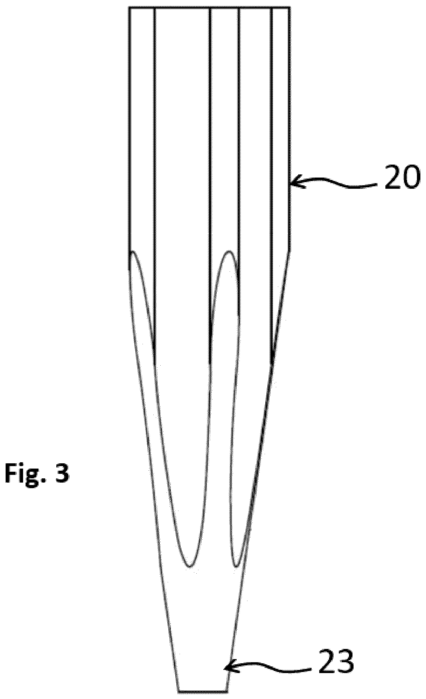

La figure 3 montre une vue en perspective de la partie basse du piquet 20.

La figure montre la première extrémité et montre une portion de pointe 23, destinée à être fichée en terre.

La longueur de la portion de pointe 23 est comprise entre 15 et 5 cm, de préférence entre 10 et 8 cm. Selon un exemple, la longueur est de 9 cm.

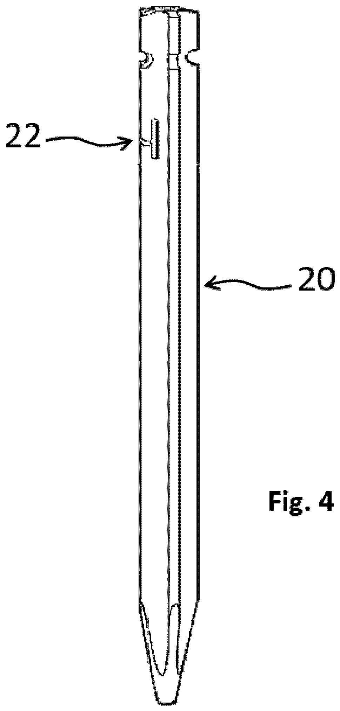

La figure 4 montre une vue en perspective du piquet 20.

Cette figure reprend certains éléments d'un piquet 20 avec une cavité 22 décrit ci-avant.

Cette vue montre l'ensemble du piquet 20 et a une longueur comprise entre 0,6m et 1,8m.

L'exemple montre un piquet 20 ayant une longueur de 1170mm.

Il existe plusieurs longueurs standards en mm : 600, 800, 1000, 1170, 1370, 1570, 1770.

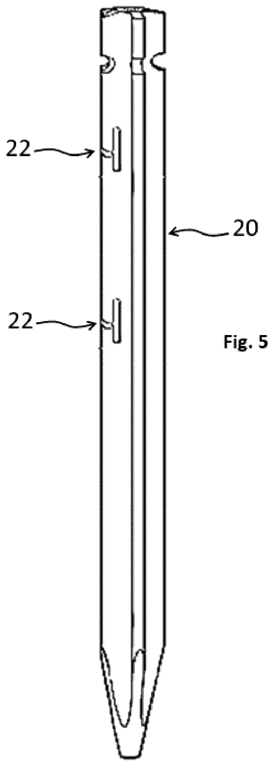

La figure 5 montre une autre vue en perspective du piquet 20.

Cette figure reprend certains éléments d'un piquet 20 décrit ci-avant.

Cette figure montre deux cavités 22 espacées l'une de l'autre. L'espace entre les deux est d'environ 300 et 500 mm, de préférence 380 mm.

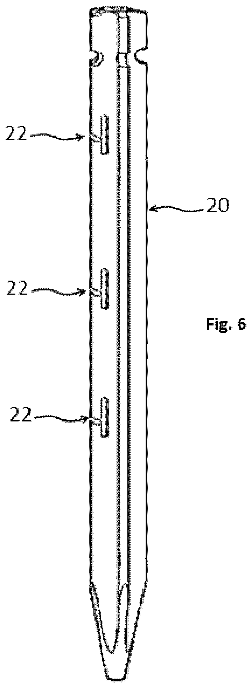

La figure 6 montre une autre vue en perspective du piquet 20.

Cette figure reprend certains éléments d'un piquet 20 décrit ci-avant.

Cette figure montre trois cavités 22 espacées l'une de l'autre. L'espace entre chaque est d'environ 300 et 500 mm, de préférence 380 mm.

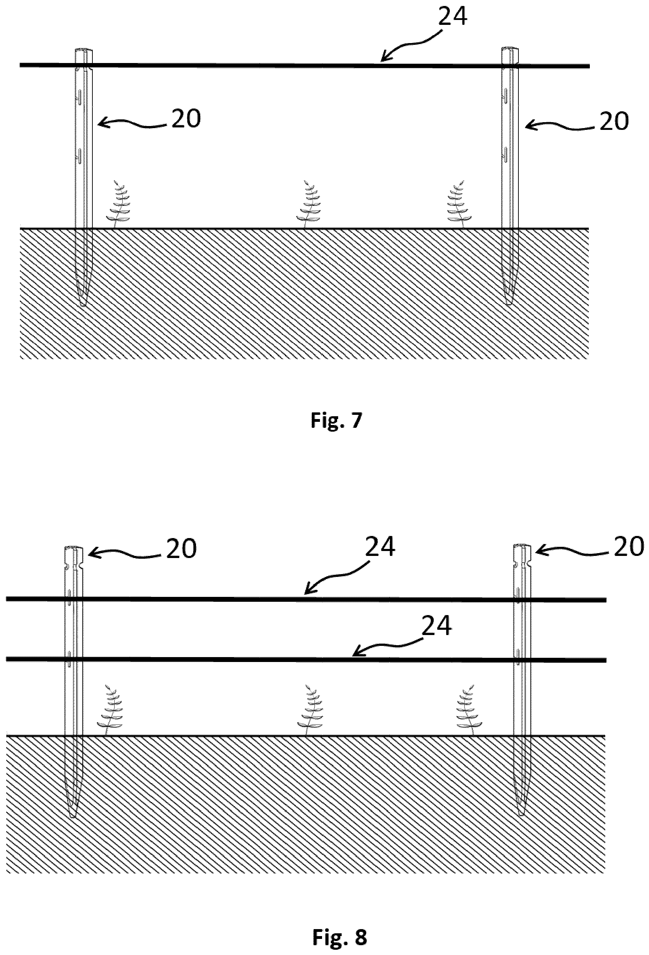

La figure 7 montre une vue de face d'une mise en place de deux piquets 20.

Pour la mise en place, il est nécessaire d'enfoncer les piquets 20 dans le sol à intervalles réguliers en fonction de la longueur de la clôture et de la solidité requise.

Des piquets 20 sont enfoncés dans le sol à distance l'un de l'autre et reliés entre eux par un élément conducteur 24.

Ensuite il est possible de fixer les éléments conducteurs aux piquets 20 à l'aide de supports appropriés. Les éléments conducteurs doivent être correctement tendus et espacés de manière uniforme pour garantir l'efficacité de la clôture électrique.

La section transversale de chaque piquet 20 a une forme ayant cinq branches ou cinq bras transversaux.

Un des bras transversaux pointe transversalement à la direction des éléments conducteurs, et porte au moins un moyen de support 22.

La tête du piquet 20 comporte un fraisage sur lequel l'élément conducteur 24 est positionné, il est possible de faire un tour, puis de le relier au piquet 20 suivant.

Les éléments conducteurs sont connectés à une source d'alimentation électrique appropriée, comme un générateur ou une prise secteur. L'élément conducteur 24 est relié à une batterie pour créer une clôture électrique.

Pour installer ces piquets 20 dans le sol, l'utilisateur devra enfoncer chaque piquet 20 jusqu'à ce que le profilé atteigne une profondeur d'environ 250 mm, assurant ainsi une base solide et stable. L'écartement optimal entre les piquets 20 devrait être compris entre 2500 mm et 3000 mm, offrant un équilibre idéal entre stabilité et économie de matériaux.

L'avantage significatif de ces piquets 20 est qu'ils ne nécessitent pas l'utilisation d'accessoires supplémentaires, ce qui représente à la fois des économies de temps et d'argent pour l'exploitant agricole. Contrairement à d'autres systèmes de clôture qui exigent l'achat et l'installation de dispositifs de fixation supplémentaires, ces piquets 20 simplifient le processus d'installation en éliminant le besoin de pièces supplémentaires.

Une fois les piquets 20 en place, l'utilisateur peut facilement positionner son ruban conducteur sur le fraisage supérieur de chaque piquet 20. Ensuite, il suffit d'enrouler le ruban conducteur autour du piquet 20 sur environ deux tours pour assurer une fixation solide. Cette méthode simple et efficace permet de sécuriser rapidement et efficacement le ruban conducteur, assurant ainsi une clôture fiable et fonctionnelle pour les besoins de l'exploitation agricole.

La figure 8 montre une vue de face d'une mise en place de deux piquets 20.

Sur cette figure qui reprend les éléments décrits ci-avant, deux éléments conducteurs sont positionnés dans les moyens de support 22. Chaque moyen de support 22 permet de maintenir une partie de l'élément conducteur 24. La mise en place est rapide.

Concernant la matière, en envisageant un processus de recyclage efficace, par exemple via un procédé de broyage, il devient possible de récupérer la matière première pour une réutilisation future, contribuant ainsi à la durabilité et à la circularité du produit.

Il est souligné que toutes les caractéristiques, telles qu'elles se dégagent pour un homme du métier à partir de la présente description, des dessins et des caractéristiques attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

### LISTE DES SIGNES DE RÉFÉRENCE

**[Table 1]**

| Références | Désignations |
|---|---|
| 20 | piquet |
| 21 | gorge |
| 22 | moyens de support |
| 23 | portion de pointe |
| 24 | élément conducteur |

## Revendications

1. Piquet pour clôture électrique, s'étendant entre une première extrémité et une deuxième extrémité, la première extrémité comporte une portion de pointe (23), destinée à être fichée en terre, entre la première et deuxième extrémité se trouve une portion principale, ledit piquet (20) comportant au moins un moyen de support (22) disposés le long de ladite portion principale, le ou lesdits moyens de support (22) comportant une cavité apte à supporter un élément conducteur (24), ledit élément conducteur (24) est un ruban conducteur, l'avant de ladite cavité étant partiellement fermé par deux rebords qui définissent entre eux une fente configurée pour la mise en place d'un élément conducteur (24) dans ladite cavité, ledit piquet comportant une section ayant au moins cinq branches, la longueur de la cavité apte à supporter un élément conducteur (24) est comprise entre 2 et 5 cm ; ledit piquet (20) comportant une gorge (21) réalisée par un fraisage d'un rayon compris entre 4 et 8 mm, à une distance comprise entre 2 et 8 cm de préférence entre 2,5 et 4,5 cm de la deuxième extrémité.

2. Piquet selon la revendication 1, dans lequel chaque bord du piquet (20) comporte un chanfrein.

3. Piquet selon la revendication 1, dans lequel la longueur de la portion de pointe (23) est comprise entre 15 et 5 cm, de préférence entre 10 et 8 cm.

4. Piquet selon la revendication 1, dans lequel entre la première extrémité et la deuxième extrémité, au centre du piquet (20) se trouve un trou traversant.

5. Piquet selon la revendication 1, dans lequel la longueur de la cavité apte à supporter un élément conducteur (24) est comprise entre 3 et 4 cm.

6. Piquet selon la revendication 1, dans lequel ledit piquet (20) est réalisé en plastique recyclé et par extrusion.

7. Piquet selon la revendication 1, dans lequel la fente est oblique, par rapport à un axe longitudinal et au plan transversal dudit piquet (20), selon un angle compris entre 35° et 75°.

## Patentansprüche

1. Pfahl für elektrischen Zaun, der sich zwischen einem ersten Ende und einem zweiten Ende erstreckt, wobei das erste Ende einen Spitzenabschnitt (23) aufweist, der zum Einstecken in die Erde bestimmt ist, zwischen dem ersten und dem zweiten Ende sich ein Hauptabschnitt befindet, wobei der Pfahl (20) mindestens ein entlang des Hauptabschnitts angeordnetes Stützmittel (22) aufweist, wobei das oder die Stützmittel (22) einen Hohlraum aufweisen, der zum Tragen eines leitenden Elements (24) ausgelegt ist, das leitende Element (24) ein leitendes Band ist, wobei die Vorderseite des Hohlraums teilweise durch zwei Kanten geschlossen ist, die zwischen ihnen einen Schlitz definieren, der für die Platzierung eines leitenden Elements (24) in dem Hohlraum konfiguriert ist, wobei der Pfahl einen Abschnitt mit mindestens fünf Schenkeln aufweist, wobei die Länge des Hohlraums, der zum Tragen eines leitenden Elements (24) ausgelegt ist, zwischen 2 und 5 cm beträgt; der Pfahl (20) eine Nut (21) aufweist, die durch Fräsen mit einem Radius zwischen 4 und 8 mm in einem Abstand zwischen 2 und 8 cm, vorzugsweise zwischen 2,5 und 4,5 cm von dem zweiten Ende, ausgeführt ist.

2. Pfahl nach Anspruch 1, wobei jede Kante des Pfahls (20) eine Fase aufweist.

3. Pfahl nach Anspruch 1, wobei die Länge des Spitzenabschnitts (23) zwischen 15 und 5 cm, vorzugsweise zwischen 10 und 8 cm beträgt.

4. Pfahl nach Anspruch 1, wobei sich zwischen dem ersten Ende und dem zweiten Ende in der Mitte des Pfahls (20) ein Durchgangsloch befindet.

5. Pfahl nach Anspruch 1, wobei die Länge des Hohlraums, der zur Aufnahme eines leitenden Elements (24) ausgelegt ist, zwischen 3 und 4 cm beträgt.

6. Pfahl nach Anspruch 1, wobei der Pfahl (20) aus recyceltem Kunststoff und durch Extrusion hergestellt ist.

7. Pfahl nach Anspruch 1, wobei der Spalt schräg zu einer Längsachse und zur Querebene des Pfahls (20) in einem Winkel zwischen 35° und 75° ist.

## Claims

1. Stake for an electric fence, extending between a first end and a second end, the first end comprises a tip portion (23), intended to be inserted in the ground, between the first and second end is a main portion, said stake (20) comprising at least one support means (22) disposed along said main portion, said support means (22) comprising a cavity capable of supporting a conductive element (24), said conductive element (24) is a conductive tape, the front of said cavity being partially closed by two edges that define between them a slot configured for placing a conductive element (24) in said cavity, said stake comprising a section having at least five branches, the length of the cavity capable of supporting a conductive element (24) is between 2 and 5 cm; said stake (20) comprising a groove (21) made by milling a radius comprised between 4 and 8 mm, at a distance between 2 and 8 cm preferably between 2.5 and 4.5 cm from the second end.

2. Stake according to claim 1, wherein each edge of the stake (20) comprises a chamfer.

3. Stake according to claim 1, wherein the length of the tip portion (23) is between 15 and 5 cm, preferably between 10 and 8 cm.

4. Stake according to claim 1, wherein between the first end and the second end, in the centre of the stake (20), there is a through-hole.

5. Stake according to claim 1, wherein the length of the cavity capable of supporting a conductive element (24) is between 3 and 4 cm.

6. Stake according to claim 1, wherein said stake (20) is made of recycled plastic and by extrusion.

7. Stake according to claim 1, wherein the slot is oblique, relative to a longitudinal axis and to the transverse plane of said stake (20), at an angle between 35° and 75°.
